# EUROPÄISCHE PATENTSCHRIFT

(11) **EP 3 563 446 B1**
(45) Veröffentlichungstag und Bekanntmachung des Hinweises auf die Patenterteilung: **03.06.2020**
(21) Anmeldenummer: 18714121.3
(22) Anmeldetag: 19.02.2018
(51) Int. Cl.: H01M 10/54

(54) **VERFAHREN ZUM RECYCLING VON LITHIUM-IONENAKKUMULATOREN**
RECYCLING METHOD FOR LITHIUM ION BATTERIES
LE RECYCLAGE DE LA MÉTHODE POUR LES BATTERIES D'ION DE LITHIUM

(43) Veröffentlichungstag der Anmeldung: 06.11.2019
(73) Patentinhaber: Weck + Poller Holding GmbH, 08056 Zwickau (DE); wks Technik GmbH, 01237 Dresden Sachsen (DE)
(72) Erfinder: SCHMIDT, Matthias, 06796 Brehna (DE); GÖCKERITZ, Marek, 08107 Kirchberg OT Wolfersgrün (DE); PAESOLD-RUNGE, Doreen, 08107 Kirchberg (DE); GÖBEL, Falk, 01471 Großdittmansdorf (DE); WIENOLD, Hannes, 01309 Dresden (DE)
(74) Vertreter: Müller, Volkmar
(86) Internationale Anmeldenummer: PCT/EP2018/000065
(87) Internationale Veröffentlichungsnummer: WO 2019/158177

(56) Entgegenhaltungen:
- WO-A1-2018/006687
- CN-A- 105 932 351

## Beschreibung

Die Erfindung betrifft ein Verfahren zum Recycling von Lithium-Ionenakkumulatoren gemäß dem Oberbegriff des Anspruchs 1.

Gegenstand der Erfindung ist auch ein Verfahren, nach welchem die Aktivmaterialien der Anoden und Kathoden von Lithium-Ionenakkumulatoren in einer für eine Wiederverwendung in gleichen oder ähnlichen Akkumulator-Typen geeigneten Form zurückgewonnen werden können.

Lithium-Ionenakkumulatoren, auch unter der Bezeichnung Li-Ionen-Batterien bzw. LIB bekannt, werden derzeit insbesondere im Rahmen der Elektromobilität und für portable elektrische Geräte genutzt. Insbesondere für Elektro-Automobile, insbesondere PKW, werden Lithium-Ionenakkumulatoren vorrangig eingesetzt.
Der Aufbau solcher Lithium-Ionenakkumulatoren ist typabhängig sehr unterschiedlich. Dabei sind derzeit eine zylinderförmige Grundform(Stabbatterie) und eine flache Grundform (Kissen bzw. Bahn) anzutreffen. Bei dieser flachen Grundform besitzt die Katode und die Anode folgerichtig eine flache (folienartige) Grundform.

LIB-Kathoden besitzen regelmäßig einen Stromableiter, beispielsweise AluminiumFolien, auf welchem das Aktivmaterial aufgebracht ist, welches insbesondere der Speicherung der Lithium-Ionen dient.
Eines dieser Aktivmaterialien basiert auf Lithium-Nickel-Cobalt-Mangan, abgekürzt NMC oder NCM. Diese NMC-Kathoden werden derzeit oft verwendet.
LIB-Anoden besitzen regelmäßig einen Stromableiter, beispielsweise Kupfer-Folien, auf welchem Aktivmaterial aufgebracht ist. In Lithium-Ionenakkumulatoren werden oft Anoden eingesetzt, welche auf Kohlenstoff (Graphit) basieren.
Im Fokus der weiteren Entwicklung von Lithium-Ionenakkumulatoren und ihrer massenhaften Verwendung stehen derzeit neben der Entwicklung der Akkumulatoren als solche die Etablierung von Recyclingverfahren, die nach dem Ende der Nutzungsdauer der Lithium-Ionenakkumulatoren diese bzw. ihre Bestandteile dem Kreislauf wieder möglichst vollständig zuführen, wobei Recyclingraten von über 90% angestrebt werden.
Die bisher im pilot-oder technischen Maßstab in die Praxis eingeführten Verfahren basieren im Wesentlichen auf pyrometallurgischen Prozessen.
Nach dem UBR-Verfahren (Fa. UMICORE) werden beispielsweise die LIB ohne vorherige Demontage aufgeschmolzen, im Ergebnis wird eine Kobalt-Nickel-KupferLegierung erhalten. Lithium und Mangan werden in der Schlacke gebunden. In anschließenden Raffinationsprozessen werden die metallischen Einzelkomponenten (Metalle, Lithium) getrennt zurückgewonnen.

Eine Bereitstellung des Aktivmaterials einer Katode insgesamt, insbesondere im Verbund mit allen metallischen Einzelkomponenten, ist nicht möglich.
Nach einem bisher nur im Labormaßstab erprobten Verfahren (Li, Guo et al. Advanced materials research 937, pp515-519, 2014) werden die LIB in ihre Bestandteile bzw. Baugruppen zerlegt.
Nach einer thermischen Behandlung werden die Aktivmaterialien der Anoden und der Kathoden mittels Wasserstrahl abgespült und nachfolgend einem Leaching-Prozess mit Schwefelsäure/Wasserstoffperoxid unterzogen.
Auf diese Weise wird der Metallverbund des Aktivmaterials zerstört. Die aufgelösten Metalle werden in weiteren Verfahrensschritten als Karbonate oder Oxalate gefällt und weiter aufbereitet.
Alle diese Verfahren haben den Nachteil, dass sie darauf ausgerichtet sind, insbesondere die metallischen Einzelkomponenten wieder zu gewinnen und diese einer wirtschaftlichen Verwertung zuzuführen. Die Bereitstellung von Aktivmaterialien auf diesem Weg erfordert einen mehrstufigen Prozess, verbunden mit einem entsprechend hohen Aufwand.

Die Aufgabe der Erfindung ist es, die Nachteile des Standes der Technik zu überwinden und ein Verfahren zum Recycling von Lithium-Ionenakkumulatoren, insbesondere mit einer LIB-Kathode, bereit zu stellen, wobei das Aktivmaterial der LIB-Kathode grundsätzlich erhalten bleibt, so dass dieses, ggf. nach einer Aufarbeitung, wieder funktionsgerecht eingesetzt werden kann. Dabei soll also keine Auflösung der LIB-Kathode in ihre metallischen Einzelkomponenten insgesamt erfolgen. Das Aktivmaterial wird lediglich von der Trägerfolie abgelöst und durch geeignete Reinigungsschritte von anhaftenden Elektrolyt- und Leitsalzresten befreit, wobei Zusammensetzung und Struktur des Aktivmaterials weitestgehend erhalten bleiben.

Die Aufgabe der Erfindung wird durch ein Verfahren mit den Merkmalen gemäß Anspruch 1 gelöst.

Erfindungswesentlich ist, dass dieses Verfahren zumindest den Verfahrensschritt des Recyclings der Kathoden des Lithium-Ionenakkumulators enthält, wobei die Kathode zum Ablösen des Aktivmaterials vom Basismaterial der Kathode einer Behandlung in Wasser oder einer wässrigen Salzlösung unterzogen wird.
Damit wird in überraschend einfachen Art und Weise erreicht, dass in wenigen einfachen Arbeitsschritten insbesondere das werthaltige Aktivmaterial der Elektroden erstmals in einer wiederverwendbaren Form zurückgewonnen wird.

Vorteile gegenüber dem Stand der Technik:
- Das Verfahren zeichnet sich durch schonende Bedingungen aus, dadurch wird die Zusammensetzung und Struktur der Aktivmaterialien weitestgehend erhalten und somit deren Wiederverwendung ermöglicht.
- Die bei thermischen Verfahren übliche Aufarbeitung der Elektroden bis zu den Ausgangsmetallen ist nicht erforderlich.
- Auch der Kohlenstoff-Anteil der Aktivmaterialien bleibt in wiederverwendbarer Form erhalten, während er bei thermischer Aufarbeitung verloren ist.
- Das Verfahren ist damit energetisch und verfahrenstechnisch weniger aufwendig und kostengünstiger.
- Das Verfahren gewährleistet die Reinigung der Aktivmaterialien von Bestandteilen, die sich aufgrund der während der Nutzung der Akkumulatoren eingetretenen teilweisen Zersetzung von Elektrolyt und Leitsalz gebildet haben und einer Wiederverwendung störend entgegenstehen würden.
- Das Verfahren zeichnet sich durch hohe Recycling-Quoten für die Aktivmaterialien und die Elektroden-Basismaterialien (Trägerfolien) aus.
- Das Verfahren vermeidet die Bildung giftiger und umweltschädlicher Abgase und Nebenprodukte.

Das erfindungsgemäße Verfahren zum Recycling werthaltiger Komponenten aus Lithium-Ionenakkumulatoren ermöglicht somit Kathoden und so gewünscht auch Anoden, nach vorausgegangener mechanischer Zerlegung der Lithium-Ionenakkumulatoren und Sortierung, getrennt einer Behandlung in Wasser oder einer wässrigen Salzlösung zu unterziehen, in deren Ergebnis sowohl das Aktivmaterial der Kathoden und so gewünscht das Aktivmaterial der Anoden in hoher Ausbeute von den jeweiligen Trägerfolien abgelöst werden und in einer solchen Form vorliegen, welche die Wiederverwendung in Lithium-Ionenakkumulatoren erlaubt.

Die abhängigen Ansprüche 2 bis 11 enthalten vorteilhafte Ausgestaltungen der Erfindung ohne diese damit zu begrenzen.

Bevorzugt ist, dass die Behandlung in einer wässrigen Salzlösung erfolgt, welche bevorzugt auf einer Natrium-Hydrogenkarbonatlösung basiert.
Eine Natrium-Hydrogenkarbonatlösung ist besonders vorteilhaft, da diese die Ablösung des Aktivmaterials vom Basismaterial beschleunigt und die Herauslösung störender Bestandteile aus dem Aktivmaterial günstig beeinflusst. Die sich dabei einstellenden pH-Werten weichen nur wenig vom Neutralpunkt ab, dadurch wird die Auslaugung der Metallkomponenten aus dem Aktivmaterial weitestgehend unterbunden. (Na-Hydrogenkarbonat ist ein Massenprodukt und somit preiswert verfügbar).

Bevorzugt ist, dass die wässrige Salzlösung 0,1 bis 2 Mol/l der Hydrogenkarbonate der Alkalimetalle Lithium, Natrium oder Kalium oder der Erdalkalimetalle Magnesium, Kalzium oder Barium enthält.
Damit können diese bekannten Hydrogenkarbonate eingesetzt werde, welche leicht zu handhaben sind und insbesondere bei geringer Konzentration relativ preiswert sind. Ein notwendiger Anteil an diesen Hydrogenkarbonaten, wobei dieser möglichst klein zu halten ist, um nachfolgende Abwasserbehandlungen möglichst ökonomisch effektiv realisieren zu können.

Bevorzugt ist, dass die Behandlung in Wasser oder einer wässrigen Salzlösung bei Temperaturen von 10 bis 60 Grad Celsius durchgeführt wird, besonders bevorzugt bei Temperaturen > 40 Grad Celsius.
Es hat sich gezeigt, dass in diesem Temperaturbereich für eine Wiederverwendung störenden Bestandteile der Beschichtungsmassen zuverlässig aus diesen entfernt werden.

Bevorzugt ist, dass die den beschichteten Anoden- und Kathodenfolien anhaftenden Elektrolytbestandteile durch ein geeignetes vorgeschaltetes Verfahren, besonders bevorzugt eine Vakuum-Verdampfung, vor der Behandlung in Wasser oder der wässrigen Salzlösung abgetrennt und separat einer Wiederverwertung zugeführt werden.
Dies ist besonders vorteilhaft, da dadurch bei der Aufbereitung des Aktivmaterials weniger Elektrolytbestandteile in das Abwasser gelangen und die Abwasserbehandlung entsprechend günstiger gestaltet werden kann.

Bevorzugt ist, dass das Verhältnis von zu behandelndem Elektrodenmaterial und Wasser oder der wässrigen Salzlösung so gewählt wird, dass sich bildende Zersetzungsprodukte des Elektrolyten oder des Leitsalzes komplett von der wässrigen Phase aufgenommen und keine giftigen oder umweltschädlichen gasförmigen Produkte gebildet werden. Bevorzugte und praktikable Verhältnisse sind dadurch gekennzeichnet, dass das Wasser oder die wässrige Salzlösung im Verhältnis von 25:1 bis 100:1 zum zu behandelndem Elektrodenmaterial verwendet werden.

Bevorzugt ist, dass die Lithium-Ionenakkumulatoren mehrere Katoden(NMC-Kathode) besitzen, deren Aktivmaterialien auf Lithium-Nickel-Cobalt-Mangan basieren und diese Kathoden jeweils eine flache Grundform besitzen.
Dies ist besonders vorteilhaft, da diese flachen Geometrien ein einfaches Öffnen der Zellbeutel, beispielsweise durch Stanzen oder Cutten, in technisch einfacher Art und Weise ermöglichen.

Bevorzugt ist, dass das Verfahren den Verfahrensschritt des Zerlegens eines mehrschichtig aufgebauten Lithium-Ionenakkumulators durch Vereinzelung der Anoden und der Katoden enthält.
Dies ist besonders vorteilhaft, da die freigelegten Anoden und Kathoden separat und hoch-automatisiert sortierend getrennt werden können. Die dann freigelegten Anoden und Kathoden können separat und hoch-automatisiert sortierend getrennt werden, beispielsweise durch getrenntes Ablegen von Kathode und Anode auf ein Förderband, beispielsweise nach dem Flex-Piker-Prinzip.
Hiermit wird eine Vermischung des Kathoden- und Anodenmaterials, wie dies bei der Shredderung auftritt, verhindert, was wiederum die Basis für den Wiedereinsatz der Materialien in Akkus bildet.

Die Aufgabe der Erfindung wird außerdem durch das erfindungsgemäße Verfahren erhaltenen Aktivmaterial und/oder Basismaterial einer Kathode eines Lithium-Ionenakkumulator gelöst.

Nachfolgend wird eine Möglichkeit der Durchführung eines solchen Verfahrens beschrieben, ohne das erfindungsgemäße Verfahren damit zu beschränken.
Das Verfahren beginnt mit der kontrollierten Entladung der Lithium-Ionenakkumulatoren. Die dabei freiwerdende Energie kann zu Heizungszwecken oder als Einspeisung in ein Elektrizitätsnetz genutzt werden. Nach der Entladung erfolgt die schrittweise Demontage der Lithium-Ionenakkumulatoren bis auf die Zellbeutelebene, wobei dies bevorzugt händisch unter Nutzung diverser Werkzeuge realisiert wird. Die separierten Zellbeutel können einer automatisierten, weiteren Demontage zugeführt werden. Hierbei erfolgt die sortenreine Trennung in Kathoden und Anoden.
Die so getrennten Kathoden und Anoden werden separat dem nächsten Verfahrensschritt zugeführt, in dem das Aktivmaterial von den Trägerfolien abgelöst wird. Das Ablösen selbst kann in Rührkesselreaktoren oder Industriewaschmaschinen (auch als Bandanlagen) realisiert werden. Die auf diese Weise von den Kathoden und Anoden gewonnen Aktivmaterialien werden über eine mechanische Abtrennung, beispielsweise durch Filter, Filterpressen, Zentrifugen, in üblicher Art und Weise abgetrennt und können nachfolgend gewaschen werden. Dem Waschen schließt sich die Trocknung im Trockenofen an. Nachfolgend sind die Pulver versandfertig. Es ist notwendig, dass das Behandeln der Kathoden- und Anodenmassen örtlich und / oder zeitlich getrennt erfolgt, um keine Vermischung der Massen zu riskieren.
Die im Prozess auftretende Abluft kann mittels Luftreinigungsverfahren, beispielsweise mittels Aktivkohleadsorber, gereinigt werden. Ebenso kann eine Prozessbadpflege der Behandlungsbäder erfolgen, beispielsweise mittels Membrantrennverfahren, was der Reduktion des Abwasseranfalls dient.
Die gewonnenen Metallfolien der Cu-Anode und der Al-Kathode können gespült und dann unter Druck und Temperatur zu Ballen versandfertig gepresst. Auch dieser Prozess findet zeitlich und / oder örtlich separat statt, um wertmindernde Vermischungen der Folien zu verhindern.

Die Aufgabe der Erfindung wird außerdem das durch das erfindungsgemäße Verfahren erhaltene Aktivmaterial und/oder Basismaterial einer Anode eines Lithium-Ionenakkumulator gelöst.

Nachfolgend wird eine Möglichkeit der Durchführung eines solchen Verfahrens beschrieben, ohne das erfindungsgemäße Verfahren damit zu beschränken.

Das Verfahren beginnt mit der kontrollierten Entladung der Lithium-Ionenakkumulatoren. Die dabei freiwerdende Energie kann zu Heizungszwecken oder als Einspeisung in ein Elektrizitätsnetz genutzt werden. Nach der Entladung erfolgt die schrittweise Demontage der Akkus bis auf die Zellbeutelebene, wobei dies bevorzugt händisch unter Nutzung diverser Werkzeuge realisiert wird. Die separierten Zellbeutel können einer automatisierten, weiteren Demontage zugeführt werden. Hierbei erfolgt die sortenreine Trennung in Kathoden und Anoden.
Die so getrennten Kathoden und Anoden werden separat dem nächsten Verfahrensschritt zugeführt, in dem das Aktivmaterial von den Trägerfolien abgelöst wird. Das Ablösen selbst kann in Rührkesselreaktoren oder Industriewaschmaschinen (auch als Bandanlagen) realisiert werden. Die auf diese Weise von den Kathoden und Anoden gewonnen Aktivmaterialien werden über eine mechanische Abtrennung, beispielsweise durch Filter, Filterpressen, Zentrifugen, in üblicher Art und Weise abgetrennt und können nachfolgend gewaschen werden. Dem Waschen schließt sich die Trocknung im Trockenofen an. Nachfolgend sind die Pulver versandfertig. Es ist notwendig, dass das Behandeln der Kathoden- und Anodenmassen örtlich und / oder zeitlich getrennt erfolgt, um keine Vermischung der Massen zu riskieren.

Die gewonnenen Metallfolien der Cu-Anode können gespült und dann unter Druck und Temperatur zu Ballen versandfertig gepresst. Auch dieser Prozess findet zeitlich und / oder örtlich separat statt, um wertmindernde Vermischungen der Folien zu verhindern.

Die Aufgabe der Erfindung wird außerdem durch eine Anlage zum Recycling von Lithium-Ionenakkumulatoren betrieben gemäß einem Verfahren nach zumindest einem der Ansprüche 1 bis 11, wobei diese Anlage zumindest eine Einheit zum Recycling des Aktivmaterials und/oder des Basismaterials einer Kathode des Lithium-Ionenakkumulators enthält.

Die Aufgabe der Erfindung wird außerdem durch eine Anlage zum Recycling von Lithium-Ionenakkumulatoren betrieben gemäß einem Verfahren nach zumindest einem der Ansprüche 1 bis 11, wobei diese Anlage zumindest eine Einheit zum Recycling des Aktivmaterials und/oder des Basismaterials einer Anode des Lithium-Ionenakkumulators enthält.

### Demontage der Akkus:

Die Demontage setzt sich aus den Schritten: Batterieöffnung, Entladung, Demontage Kabel, Kühlung, Sicherungen, Steuerteile, Demontage Zellblöcke aus Akku-Wanne, Demontage Leiterplatten-Reihenschaltung und Freilegung Zellenbeutel zusammen. Diese Schritte erfolgen unter Zuhilfenahme geeigneter Werkzeuge händisch. Die Beutel werden dann automatisch geöffnet, bevorzugte Verfahren sind hierbei Stanzen und Schneiden. Folgend erfolgt die sortenreine Sortierung in Anode, Kathode und Separatorfolie. Dies ist robotergestützt und kann beispielhaft nach dem Flex-Piker-Verfahren erfolgen.
Das Anoden- und Kathodenmaterial wird örtlich und / oder zeitlich separat dem nächsten Verfahren zugeführt; die Separatorfolie der Entsorgung. Der Transport der genannten Materialien erfolgt beispielhaft auf einfachen Transportbändern.
Die Beutelöffnung erfolgt unter Abzug der Atmosphäre, da diese Schadstoffe enthält. Diese Schadstoffe werden adsorptiv abgeschieden, beispielsweise mittels Aktivkohlefilter.

Im Folgenden soll die Erfindung an Hand von drei Beispielen näher erläutert werden, wobei diese durch diese nicht beschränkt wird.

### Beispiel 1:

27 g beschichteter Folienanoden aus einer Lithiumionen-Traktionsbatterie werden in einem geschlossenen Rührbehälter unter mäßigem Rühren bei einer Temperatur von 30 Grad Celsius mit einer 1 Mol/Liter enthaltenden Natrium-Hydrogenkarbonatlösung behandelt. Nach 20 Minuten Reaktionszeit hat sich das Aktivmaterial komplett von der die Elektrodenbasis bildenden Kupferfolie gelöst. Die Kupferfolie wird abgetrennt, mehrfach mit Wasser gespült, getrocknet und der Altmetallverwertung zugeführt. Das abgelöste Anodenaktivmaterial wird mit 1 Liter 0,1 M Natrium-Hydrogenkarbonatlösung und 3 Liter destilliertem Wasser nacheinander in Portionen gewaschen, abfiltriert und bei 60 -120 Grad Celsius bis zu einem Restfeuchtegehalt von < 5 Gew.-% getrocknet.

Aus 27 g Ausgangsmaterial wurden 7,8 g Kupferfolie und 18,7 g Aktivmaterial zurückgewonnen.

### Beispiel 2:

1460 g beschichtete Folienkathoden aus einer Lithiumionen-Traktionsbatterie werden in einer Industriewaschmaschine bei einer Temperatur von 40 Grad Celsius mit 150 l Wasser gewaschen. Nach 3 Minuten Waschzeit hat sich das Aktivmaterial zu mehr als 95% von der die Elektrodenbasis bildenden Aluminiumfolie gelöst. Die Aluminiumfolie wird abgetrennt, mehrfach mit Wasser gespült, getrocknet und der Altmetallverwertung zugeführt.

Das abgelöste Aktivmaterial der Kathoden wird abfiltriert und bei 60 -100 Grad Celsius bis zu einem Restfeuchtegehalt von < 5 Gew.-% getrocknet.

Aus 1460 g Ausgangsmaterial wurden 130 g Aluminiumfolie und 1303 g Aktivmaterial zurückgewonnen.

Die analytische Untersuchung des erhaltenen Abwassers ergab folgende Konzentrationswerte für die im Aktivmaterial enthaltenen Metalle: Kobalt 0,44 mg/l, Nickel 0,51 mg/l, Mangan 0,85 mg/l. Umgerechnet auf die Gesamtabwassermenge und den Gehalt der Metalle im Ausgangsmaterial ergibt sich daraus, dass lediglich 0,4 bis 0,9 Promille der Metalle bei der Behandlung ausgelaugt werden. Damit ist belegt, dass die Metalloxid-Matrix der Aktivmaterialien durch die Behandlung nicht nachteilig beeinflusst wird.

### Beispiel 3:

45 kg NMC-Aktivmaterial wurden nach der im Beispiel 2 beschriebenen Prozedur gewonnen. Dieses Aktivmaterial wurde einer vergleichenden Untersuchung bzgl. der Nickel-, Mangan- und Kobaltzusammensetzung unterzogen, Benchmark Neuware.

Die Zusammensetzung des recycelten Aktivmaterials entsprach vollends den für Neumaterialien vorgegebenen Toleranzen der Konzentrationswerte der Metalle.

Das recycelte Aktivmaterial wurde einem Mahlprozess zugeführt, um die Partikelgröße der Neuware einzustellen. Durch Zugabe von Bindern und weiteren Zusatzstoffen wurde eine Beschichtungsmasse hergestellt, die der Zusammensetzung von Neukathodenmaterial entsprach. Nach der Beschichtung erfolgte die Integration der Recyclatkathoden in eine Automotiv-Batterie.

Im Praxistest erreichte diese Batterie mit recycelten Aktivmaterial elektrische Kennwerte von > 98% im Vergleich zur Neubatterie.

Ein adäquater Versuch wurde mit dem Aktivmaterial der Anoden durchgeführt. Hierbei wurden ca. 32 kg Anoden-Aktivmaterial zurückgewonnen. Auch dieses Material wurde getrocknet, gemahlen und dann für die Neubeschichtung eines Anodenstranges verwendet.

Der Batterietest ergab hier elektrische Kennwerte von ca. 85% vergleichend zur Neubatterie. Schon durch 10%-igen massegleichen Ersatz des Recyclatmaterials durch Neuware konnten elektrische Kennwerte von 95% erreicht werden.

## Patentansprüche

1. Verfahren zum Recycling von Lithium-Ionenakkumulatoren, welche zumindest eine Kathode und eine Anode besitzt und die Kathode aus einem Basismaterial und ein auf diesem angeordnetes Aktivmaterial besitzt, das Verfahren den Verfahrensschritt des Zerlegens eines mehrschichtig aufgebauten Lithium-Ionenakkumulators durch Vereinzelung der Anoden und der Kathoden enthält, **dadurch gekennzeichnet, dass** dieses Verfahren zumindest den Verfahrensschritt des Recyclings der Kathoden des Lithium-Ionenakkumulators enthält, wobei die Kathode zum Ablösen des Aktivmaterials vom Basismaterial der Kathode einer Behandlung in Wasser oder einer wässrigen Salzlösung unterzogen wird.

2. Verfahren zum Recycling von Lithium-Ionenakkumulatoren gemäß Anspruch 1, **dadurch gekennzeichnet, dass** die Behandlung in einer wässrigen Salzlösung, welches bevorzugt auf einer Natrium-Hydrogenkarbonatlösung basiert, erfolgt.

3. Verfahren zum Recycling von Lithium-Ionenakkumulatoren gemäß Anspruch 1, **dadurch gekennzeichnet, dass** die wässrigen Salzlösung 0,1 bis 2 Mol/l der Hydrogenkarbonate der Alkalimetalle Lithium, Natrium oder Kalium oder der Erdalkalimetalle Magnesium, Kalzium oder Barium enthält.

4. Verfahren zum Recycling von Lithium-Ionenakkumulatoren gemäß Anspruch 1, **dadurch gekennzeichnet, dass** die Behandlung in einer wässrigen Salzlösung bei Temperaturen von 10 bis 60 Grad Celsius durchgeführt wird,

5. Verfahren zum Recycling von Lithium-Ionenakkumulatoren gemäß Anspruch 1, **dadurch gekennzeichnet, dass** die den beschichteten Anoden- und Kathodenfolien anhaftenden Elektrolytbestandteile durch ein vorgeschaltetes Verfahren, besonders bevorzugt eine Vakuum-Verdampfung, vor einer Behandlung in Wasser oder einer wässrigen Salzlösung abgetrennt und separat einer Wiederverwertung zugeführt werden.

6. Verfahren zum Recycling von Lithium-Ionenakkumulatoren gemäß Anspruch 1, **dadurch gekennzeichnet, dass** das Verhältnis von zu behandelndem Elektrodenmaterial und Wasser oder einer wässrigen Salzlösung so gewählt wird, dass sich bildende Zersetzungsprodukte des Elektrolyten oder des Leitsalzes komplett von der wässrigen Phase aufgenommen und keine giftigen oder umweltschädlichen gasförmigen Abprodukte gebildet werden.

7. Verfahren zum Recycling von Lithium-Ionenakkumulatoren gemäß Anspruch 1, **dadurch gekennzeichnet, dass** die Lithium-Ionenakkumulatoren Kathoden (NMC-Kathode) besitzen, deren Aktivmaterialien auf Lithium-Nickel-Cobalt-Mangan basiert.

8. Verfahren zum Recycling von Lithium-Ionenakkumulatoren gemäß Anspruch 1, **dadurch gekennzeichnet, dass** die Lithium-Ionenakkumulatoren Anoden besitzen, welche auf Kohlenstoff (Graphit) basieren und diese Anoden jeweils eine flache Grundform besitzen.

9. Verfahren zum Recycling von Lithium-Ionenakkumulatoren gemäß Anspruch 1, **dadurch gekennzeichnet, dass** das Zerlegen mechanisch erfolgt.

10. Verfahren zum Recycling von Lithium-Ionenakkumulatoren gemäß Anspruch 1, **dadurch gekennzeichnet, dass** Anoden und Kathoden nach vorausgegangener mechanischer Zerlegung der Lithium-Ionenakkumulatoren und Sortierung getrennt einer Behandlung in Wasser oder einer wässrigen Salzlösung unterzogen werden, in deren Ergebnis sowohl das Anoden- als auch das Kathodenaktivmaterial in hoher Ausbeute vom Elektroden-Basismaterial abgelöst werden.

11. Anlage zum Recycling von Lithium-Ionenakkumulatoren gemäß dem Verfahren zumindest einem der Ansprüche 1 bis 10, wobei diese Anlage zumindest eine Einheit zum Recycling des Aktivmaterials und/oder des Basismaterials einer Kathode des Lithium-Ionenakkumulators enthält.

12. Anlage zum Recycling von Lithium-Ionenakkumulatoren gemäß Anspruch 11, wobei diese Anlage zumindest eine Einheit zum Recycling des Aktivmaterials und/oder des Basismaterials einer Anode des Lithium-Ionenakkumulators enthält.

## Claims

1. A method for recycling lithium-ion batteries, which have at least one cathode and one anode and the cathode comprises a base material and an active material arranged thereon, comprising at least the process step of dismantling a multilayer lithium-ion battery by separating the anode and the cathode, **characterized in that** this method comprises at least the process step of recycling the cathodes of the lithium-ion battery, whereby the cathode is subjected to a treatment in water or an aqueous salt solution to detach the active material from the base material of the cathode.

2. A method for recycling lithium-ion batteries according to claim 1, **characterized in that** the treatment is carried out in an aqueous salt solution, which is preferably based on a sodium bicarbonate solution.

3. A method for recycling lithium-ion batteries according to claim 1, **characterized in that** the aqueous salt solution contains 0.1 to 2 mol/l of hydrogencarbonates of the alkali metals lithium, sodium, or potassium or the alkaline earth metals magnesium, calcium, or barium.

4. A method for recycling lithium-ion batteries according to claim 1, **characterized in that** the treatment is carried out in an aqueous salt solution at temperatures from 10 to 60 degrees Celsius.

5. A method for recycling lithium-Ion batteries according to claim 1, **characterized in that** the electrolyte components adhering to the coated anode and cathode films are separated by an upstream method, particularly preferably vacuum evaporation, before treatment in water or an aqueous salt solution and separate recycling.

6. A method for recycling lithium-ion batteries according to claim 1, **characterized in that** the ratio of the electrode material to be treated to the water or aqueous salt solution is selected so that the decomposition products formed from the electrolyte or the conducting salt are completely absorbed by the aqueous phase and no toxic or environmentally harmful gaseous waste products are formed.

7. A method for recycling lithium-ion batteries according to claim 1, **characterized in that** the lithium-Ion batteries have cathodes (NMC cathodes) whose active materials are based on lithium nickel cobalt manganese oxides.

8. A method for recycling lithium-ion batteries according to claim 1, **characterized in that** the lithium-ion batteries have anodes, which are based on carbon (graphite), and each of these anodes has a flat basic shape.

9. A method for recycling lithium-ion batteries according to claim 1, **characterized in that** the dismantling takes place mechanically.

10. A method for recycling lithium-ion batteries according to claim 1, **characterized in that** anodes and cathodes, after prior mechanical dismantling of the lithium-ion batteries and sorting, are separately subjected to treatment in water or an aqueous salt solution, as a result of which the active materials of both the anode and the cathode can be recovered from the electrode base material with high yields.

11. A system for recycling lithium-ion batteries according to the method of at least one of claims 1 to 10, whereby said system comprises at least one unit for recycling the active material and/or base material of a cathode of the lithium-ion battery.

12. A system for recycling lithium-ion batteries according to claim 11, whereby this system comprises at least one unit for recycling the active material and/or base material of an anode of the lithium ion battery.

## Revendications

1. Procédé pour le recyclage de batteries lithium-ion, qui comprennent au moins une cathode et une anode et la cathode d'une matière de base et comprend une matière active disposée sur celle-ci, le procédé comportant l'étape de procédé de décomposition d'une batterie lithium-ion constituée de plusieurs couches par séparation des anodes et cathodes,
**caractérisé par le fait que** ce procédé comporte au moins l'étape de procédé de recyclage des cathodes de la batterie lithium-ion, la cathode étant soumise à un traitement dans l'eau ou dans une solution saline aqueuse pour détacher la matière active de la matière de base.

2. Procédé pour le recyclage de batteries lithium-Ion selon la revendication 1, **caractérisé par le fait que** le traitement s'effectue dans une solution saline aqueuse, qui est basée de préférence sur une solution d'hydrogénocarbonate de sodium.

3. Procédé pour le recyclage de batteries lithium-ion selon la revendication 1,
**caractérisé par le fait que** la solution saline aqueuse contient 0,1 à 2 Mol/l d'hydrogénocarbonate de métaux alcalins lithium, sodium ou potassium ou de métaux alcalino-terreux magnésium, calcium ou baryum.

4. Procédé pour le recyclage de batteries lithium-ion selon la revendication 1,
**caractérisé par le fait que** le traitement est réalisé dans une solution saline aqueuse à des températures de 10 à 60 degrés Celsius.

5. Procédé pour le recyclage de batteries lithium-ion selon la revendication 1, **caractérisé par le fait que** les composants d'électrolyte adhérents aux feuilles d'anode et de cathode enduites sont séparés par un procédé en amont, en particulier de préférence une vaporisation sous vide, avant un traitement dans l'eau ou dans une solution saline aqueuse et font l'objet séparément d'une réutilisation.

6. Procédé pour le recyclage de batteries lithium-ion selon la revendication 1,
**caractérisé par le fait que** le rapport entre la matière d'électrode à traiter et l'eau ou une solution saline aqueuse est sélectionné de sorte que les produits de décomposition se formant des électrolytes ou du sel conducteur sont absorbés complètement par la phase aqueuse et qu'aucun déchet toxique ou gazeux nocif pour l'environnement n'est formé.

7. Procédé pour le recyclage de batteries lithium-Ion selon la revendication 1,
**caractérisé par le fait que** les batteries lithium-ion comprennent des cathodes (cathode NMC), dont les matières actives sont basées sur le lithium, le nickel, le cobalt et le manganèse.

8. Procédé pour le recyclage de batteries lithium-ion selon la revendication 1,
**caractérisé par le fait que** les batteries lithium-ion comprennent des anodes, qui se basent sur du carbone (graphite) et ces anodes ont respectivement une forme de base plate.

9. Procédé pour le recyclage de batteries lithium-ion selon la revendication 1,
**caractérisé par le fait que** le procédé de décomposition est mécanique.

10. Procédé pour le recyclage de batteries lithium-ion selon la revendication 1, **caractérisé par le fait que** les anodes et les cathodes sont soumises après la décomposition mécanique précédente des batteries lithium-ion et le tri séparément à un traitement dans l'eau ou dans une solution saline aqueuse, en résultat de quoi aussi bien les matières d'anode et de cathode sont séparées avec un rendement élevé de la matière de base d'électrode.

11. Installation pour le recyclage de batteries lithium-Ion selon !e proceed au moins l'une des revendications 1 à 104, cette installation comprenant au moins une unité pour le recyclage de la matière active et/ou de la matière de base d'une cathode de la batterie lithium-ion.

12. Installation pour le recyclage de batteries lithium-ion selon la revendication 11, cette installation comprenant au moins une unité pour le recyclage de la matière active et/ou de la matière de base d'une anode de batterie lithium-ion.
